Europäisches Patentamt

(19) European Patent Office

Office européen des brevets

(11) Numéro de publication : **0 445 480 A2**

# (12) DEMANDE DE BREVET EUROPEEN

(21) Numéro de dépôt : **90403673.8**

(22) Date de dépôt : **19.12.90**

(51) Int. Cl.⁵ : **G01C 5/04**

(30) Priorité : **21.12.89 FR 8917003**

(43) Date de publication de la demande :
**11.09.91 Bulletin 91/37**

(84) Etats contractants désignés :
**AT BE CH DE DK ES FR GB GR IT LI LU NL SE**

(71) Demandeur : **INSTALLATION EUROPEENNE
DE RAYONNEMENT SYNCHROTRON (
EUROPEAN SYNCHROTRON RADIATION
FACILITY) E.S.R.F.
Avenue des Martyrs
F-38000 Grenoble (FR)**

(72) Inventeur : **Roux, Daniel
80, Allée des Troenes
F-38340 Voreppe (FR)**

(74) Mandataire : **Casalonga, Alain et al
BUREAU D.A. CASALONGA - JOSSE
Morassistrasse 8
W-8000 München 5 (DE)**

(54) **Dispositif de mesure ou de contrôle de dénivellation entre plusieurs points.**

(57)    Dispositif de mesure ou de contrôle de dénivellation ou de variation de dénivellation entre plusieurs points, comprenant des pots fermés (2), placés respectivement en chacun desdits points, ces pots étant partiellement remplis d'un liquide (53) et étant reliés par des conduites de liquide débouchant dans leur partie inférieure de manière à former un circuit de liquide (31) et par des conduites de gaz débouchant dans leur partie supérieure de manière à former un circuit de gaz (36), chaque pot étant équipé d'un capteur capacitif (11) de proximité placé audessus et à distance de la surface supérieure (54) du liquide qu'il contient et adapté pour fournir un signal de position dans le sens vertical d'une zone de cette surface supérieure du liquide dans ce pot, ainsi que des moyens pour comparer les signaux fournis par lesdits capteurs de manière à pouvoir fournir des informations de position verticale desdits pots, et en conséquence desdits points, les uns par rapport aux autres ou par rapport à une position verticale de référence.

EP 0 445 480 A2

# FIG.2

# DISPOSITIF DE MESURE OU DE CONTROLE DE DENIVELLATION ENTRE PLUSIEURS POINTS

La présente invention concerne un dispositif de mesure ou de contrôle de dénivellation ou de variation de dénivellation entre plusieurs points.

Il existe bien des domaines dans lesquels il est ou il devient indispensable de mesurer ou de contrôler avec précision la dénivellation ou la variation de dénivellation entre plusieurs points qui peuvent éventuellement être situés à des distances relativement importantes les uns des autres. Il est et il devient également important de pouvoir effectuer les mesures ou contrôles précités de manière continue afin de pouvoir éventuellement effectuer des opérations d'intervention sur la position verticale des points.

Le but de la présente invention est donc de fournir un dispositif permettant de mesurer ou de contrôler la dénivellation ou la variation de dénivellation entre plusieurs points choisis par exemple, en vue de leur bon fonctionnement ou en vue de prévenir des accidents, sur les éléments constitutifs notamment d'accélérateurs nucléaires, de centrales nucléaires, de radiers de réacteurs, de radiers de tours de refroidissement, de barrages hydrauliques ou de tous autres ouvrages d'art tels que des ponts, de rampes d'accélération ou de rails de guidage, de marbres ou de bâtis de machines-outils, ou choisis en différents endroits du sol afin de pouvoir surveiller en particulier les mouvements des plaques terrestres.

Pour atteindre les objectifs précités, le dispositif de l'invention comprend des pots fermés, placés respectivement en chacun desdits points, ces pots étant partiellement remplis d'un liquide et étant reliés par des conduites de liquide débouchant dans leur partie inférieure de manière à former un circuit de liquide et par des conduites de gaz débouchant dans leur partie supérieure de manière à former un circuit de gaz, chaque pot étant équipé d'un capteur capacitif de proximité qui présente au moins deux électrodes espacées horizontalement et dont la face inférieure est placée au-dessus et à distance de la surface supérieure du liquide qu'il contient et qui est adapté pour fournir un signal de position dans le sens vertical d'une zone de cette surface supérieure du liquide dans ce pot. Il comprend également des moyens pour comparer les signaux fournis par lesdits capteurs de manière à pouvoir fournir des informations de position verticale desdits pots, et en conséquence desdits points les uns par rapport aux autres ou par rapport à une position verticale de référence.

Selon l'invention, ledit circuit de gaz peut être relié à une source de gaz à pression constante.

Le gaz précité pourrait avantageusement être de l'air, le circuit d'air ainsi constitué étant par exemple relié à l'atmosphère.

Selon l'invention, le dispositif comprend de préférence un pot auxiliaire inséré dans le circuit de liquide et dans le circuit de gaz, ce pot auxiliaire étant adapté pour le remplissage du circuit de liquide.

De préférence, le dispositif comprend une pompe permettant de faire circuler le liquide dans ledit circuit de liquide qui peut également être équipé d'une vanne de fermeture, ladite pompe étant de préférence montée en by-pass par rapport à cette vanne.

Selon l'invention, le corps dudit pot est de préférence à paroi épaisse.

Chaque pot peut avantageusement être équipé d'une sonde de température permettant de mesurer la température du liquide, cette sonde pouvant par exemple être insérée dans le corps du pot et s'étend à faible distance du liquide.

Selon un choix particulier, le liquide remplissant le circuit de liquide précité est de l'eau contenant de préférence une substance anti-bactérienne telle que de l'eau de Javel.

Dans une variante préférée de l'invention, ledit capteur capacitif comprend une électrode centrale à axe vertical entourée à distance par une électrode annulaire de garde, un isolant électrique annulaire placé entre ces électrodes et relié à ces derniers de façon étanche ainsi qu'un isolant électrique annulaire s'étendant autour de l'électrode annulaire de garde et relié de façon étanche à cette dernière et au corps du pot, la face radiale inférieure desdites électrodes et desdits isolants, tournée vers la surface du liquide, étant dans un même plan horizontal.

De préférence, lesdites électrodes sont en un alliage de fer et de nickel à 42% de nickel et lesdits isolants électriques sont en verre.

De préférence, la face inférieure dudit capteur capacitif est recouverte d'une couche résistant à la corrosion.

De même, la paroi intérieure dudit pot peut être recouverte d'une couche résistant à la corrosion.

Ces couches de revêtement sont de préférence en étain-zing.

Dans une variante, ledit capteur capacitif est porté par une partie supérieure amovible dudit pot.

Selon l'invention, le dispositif comprend de préférence un moyen permettant de chauffer les éléments constitutifs du capteur capacitif.

La présente invention sera mieux comprise à l'étude d'un dispositif de mesure ou de contrôle de dénivellation ou de variation de dénivellation entre plusieurs points décrit à titre d'exemple non limitatif et illustré sur le dessin sur lequel:

– la figure 1 représente une vue en perspective d'un dispositif selon l'invention comprenant trois pots;

– la figure 2 montre une coupe verticale d'un pot du dispositif représenté sur la figure 1;

– et la figure 3 représente schématiquement un circuit électronique de traitement de signaux, associé au dispositif précité.

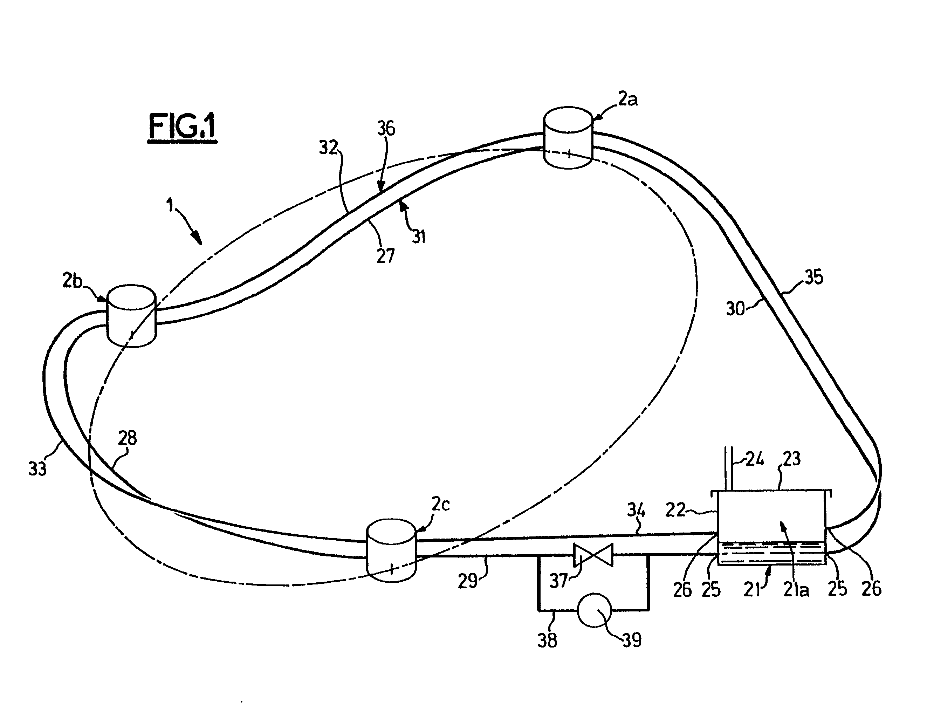

Le dispositif de mesure ou de contrôle de dénivellation ou de variation de dénivellation représenté sur la figure 1 et repéré d'une manière générale par la référence 1 est par exemple adapté au contrôle des tassements des éléments magnétiques d'un accélérateur à rayonnement synchroton dans lequel il convient de surveiller tout déplacement vertical dans une gamme très petite, éventuellement comprise entre 0 et 100 microns afin d'intervenir sur les vérins de réglage des éléments magnétiques et de minimiser l'influence des tassements du sol sur l'orbite du faisceau de particules.

Bien qu'il puisse en comprendre beaucoup plus, le dispositif 1 représenté sur la figure 1 comprend trois pots 2a, 2b et 2c qui sont fixés en trois points déterminés situés normalement dans un même plan horizontal et dont on souhaite connaître les variations éventuelles de position dans le sens vertical.

Pour reprendre l'exemple d'application ci-dessus, les différents pots 2a, 2b et 2c et éventuellement d'autres pots peuvent être respectivement fixés sur la structure des différents éléments magnétiques précités.

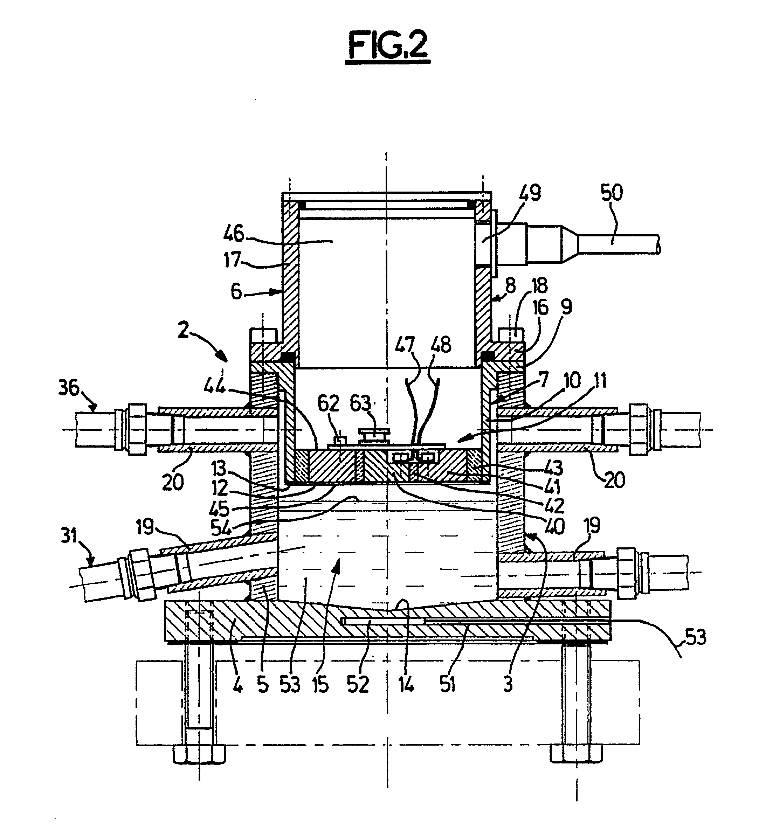

Les pots 2a, 2b et 2c du dispositif 1 représenté sur la figure 1 sont identiques au pot représenté sur la figure 2 et repérés d'une manière générale par la référence 2, dont la structure est la suivante.

Le pot 2 comprend un corps 3 hermétiquement fermé qui comprend une plaque d'embase horizontale 4, une paroi cylindrique 5 à axe vertical dont la partie inférieure est fixée de manière étanche à l'embase 4 et une partie supérieure amovible repérée d'une manière générale par la référence 6 qui comprend un support 7 de capteur et un couvercle 8.

Le support 7 comprend une collerette annulaire 9 en appui sur le bord supérieur de la partie cylindrique 5 et une partie cylindrique 10 qui s'étend vers le bas à partir de la collerette 9 à l'intérieur de la partie cylindrique 5 et à distance de sa paroi cylindrique intérieure, coaxialement à cette dernière.

A l'intérieur de la partie inférieure 2 de la partie cylindrique 10 du support 7 est monté un capteur capacitif repéré d'une manière générale par la référence 11. La face inférieure 12 de ce capteur capacitif 11 qui sera décrit plus loin et l'extrémité annulaire 13 de la partie cylindrique 10 s'étendent dans un même plan horizontal, à distance du fond 14 de la chambre 15 ainsi définie dans le corps 3.

Le chapeau 8 comprend une collerette annulaire 16 qui est placée en appui sur le collerette 9 et une partie cylindrique 17 qui s'étend vers le haut.

Les collerettes 9 et 16 sont traversées par une multiplicité de vis 18 qui sont vissées dans la partie supérieure de la paroi cylindrique 5 du corps 3 de manière à constituer entre ces dernières une liaison étanche.

Le corps 3 est équipé de deux tubulures extérieures opposées 19 qui sont fixées de façon étanche sur la partie inférieure de la paroi cylindrique 5 et qui communiquent avec la partie inférieure de la chambre 15, en-dessous de la face inférieure 12 du capteur capacitif 11. L'une de ces tubulures est radiale tandis que l'autre s'étend vers l'extérieur et vers le bas.

Le corps 3 est également équipé de deux tubulures extérieures opposées 20 qui sont fixées à la partie supérieure de la paroi cylindrique 5 et qui s'étendent radialement, ces tubulures communiquant avec la partie supérieure de la chambre 15, en face de la paroi périphérique de la partie cylindrique 10 du support 7.

En se reportant à la figure 1, on voit que le dispositif 1 comprend en outre un pot auxiliaire 21 dont la face inférieure est sensiblement au même niveau que la face inférieure des pots 2a, 2b et 2c. Ce pot 21 comprend un corps 22 en forme de cuvette recouvert par un couvercle 23 muni d'une tubulure de mise à l'atmosphère 24 s'étendant vers le haut. Ce pot auxiliaire 24 est également muni, dans sa partie inférieure, de tubulures extérieures opposés 25 et, dans sa partie supérieure, de tubulures extérieures opposés 26.

Les tubulures inférieures 19 des pots 2a, 2b et 2c et les tubulures inférieures 25 du pot auxiliaire 21 sont respectivement reliées par des conduites 27, 28, 29 et 30 de manière à constituer un circuit fermé 31 dans lequel les chambres intérieures 15 des pots 2a, 2b et 2c et la chambre 21a du pot auxiliaire 21 sont en communication, ces conduites s'étendant sensiblement horizontalement.

De même, les tubulures supérieures 20 des pots 2a, 2b et 2c et les tubulures supérieures 26 du pot auxiliaire 21 sont reliées par des conduites 32, 33, 34 et 35 de manière à constituer un circuit fermé 36 dans lequel les chambres intérieures 15 des pots 2a, 2b et 2c et la chambre intérieure 21a du pot auxiliaire 21 sont en communication.

Sur la conduite 29 est prévue une vanne de fermeture 37. Une conduite 38 sur laquelle est prévue une pompe de circulation 39 est montée en by-pass par rapport à cette vanne de fermeture 37.

En se reportant à la figure 2, on voit que le capteur capacitif de proximité 11 comprend, concentriquement à la paroi cylindrique 5 du corps 3, une électrode centrale 40 constituée par un bloc cylindrique, une électrode de garde annulaire 41 dont les surfaces intérieures et extérieures cylindrique sont situées respectivement à distance de la surface extérieure cylindrique de l'électrode centrale 40 et de la surface intérieure cylindrique de la partie cylindrique 10 du support 7, un isolant électrique annulaire 42 qui remplit l'espace séparant l'électrode centrale 40 et l'électrode annulaire de garde 41, ainsi qu'un isolant électrique annulaire 43 qui remplit l'espace séparant l'électrode annulaire de garde 41 et la partie cylindrique 10 du support 7.

Les électrodes 40 et 41 et les isolants électriques 42 et 43 présentent, à partir de la surface horizontale précitée 12, des épaisseurs égales de telle sorte qu'ils s'étendent entre cette surface inférieure horizontale 12 et une surface horizontale supérieure 44.

L'électrode centrale 40 et l'électrode annulaire de garde 41 sont de préférence en un alliage Fe-Ni à 42% de Ni et les isolants électriques 42 et 43 sont de préférence en verre, ces éléments constitutifs du capteur capacitif 11 étant de préférence scellés par un procédé de scellement à chaud garantissant l'étanchéité dans leurs surfaces en contact.

La surface inférieure 12 du capteur capacitif 11 est revêtue d'une couche fine 45 anti-corrosion. De même, les parois intérieures de la chambre 15 du pot 2 sont également recouvertes d'une couche mince de protection anti-corrosion. Ces couches sont de préférence constituées par un revêtement étain-zinc.

L'électrode centrale 40 et l'électrode annulaire de garde 41 sont reliées, par l'intermédiaire de deux conducteurs électriques 47 et 48, à un circuit 46 de fourniture de signaux qui est prévu dans le couvercle 8 qui portent un connecteur électrique 49 pour le branchement d'un câble électrique 50 de raccordement.

L'embase 4 du corps 3 présente un évidement 51 qui débouche latéralement et qui s'étend à faible distance du fond 14 de la chambre 15. Dans cet évidement 51 est disposée une sonde de température 52 qui est munie d'un câble électrique de raccordement 53.

Le dispositif 1 qui 'vient d'être décrit peut être utilisé et fonctionne de la manière suivante.

Tout d'abord, en utilisant le pot auxiliaire 21, on remplit lentement le circuit 31 d'un liquide 53 conducteur de l'électricité, de préférence d'eau contenant un produit antimicrobien tel que de l'eau de Javel, jusqu'à ce que le niveau d'eau dans les pots 2a, 2b et 2c soit situé à une distance déterminée de la face inférieure 12 de leur capteur capacitif 11. Lors de cette opération, on ferme la vanne 37 et on active la pompe 39 qui fait circuler doucement l'eau dans le circuit de liquide 31. Le circuit de liquide 31 se remplissant par effet de vase communicant, cette pompe 39 permet d'éliminer les bulles d'air qui pourraient subsister dans les conduites 27, 28, 29 et 30 et qui s'évacuent dans les pots.

Lorsque le niveau d'eau souhaité est atteint, on arrête la pompe de circulation 39 et on ouvre la vanne 37.

Après un délai de stabilisation, les pots 2a, 2b, 2c et 21 étant à la pression atmosphérique par la tubulure 24, les pots 2a, 2b et 2c sont soumis à la même pression d'air par le circuit 36 de telle sorte que les surfaces supérieures 54 des colonnes d'eau 53 établies dans les pots 2a, 2b, 2c et 21 s'étendent dans un même plan horizontal.

Il en résulte que, dans chaque pot 2a, 2b et 2c, la distance entre la face inférieure 12 de leur capteur capacitif 11 et la surface supérieure 54 de la colonne de liquide qu'ils contiennent correspond à la position verticale du pot et en conséquence à la position verticale du point sur lequel est fixé ce dernier par rapport au plan horizontal dans lequel s'étend la face supérieure du liquide dans les pots. Ainsi, les signaux fournis par le capteur capacitif 11 de chacun des pots 2a, 2b et 2c qui correspond à cette distance fournissent une information en ce qui concerne la position dans le sens vertical du pot et en conséquence du point sur lequel il est fixé.

Cette distance entre chacun des points sur lesquels sont fixés les pots 2a, 2b et 2c et le plan horizontal précité dépend également de la température du corps 3 et de la colonne de liquide contenu dans chaque pot. Les sondes de température 53 fournissant cette température, il est alors possible de corriger les signaux fournis par les capteurs capacitifs 11 afin d'obtenir une mesure de distance correcte.

Il convient d'observer que, comme l'électrode centrale 40 est à distance de la surface intérieure verticale de la paroi 5 du pot et couvre une zone de la surface 54 de la colonne de liquide, d'une part cette zone est parfaitement plane et d'autre part d'éventuelles poussières sur la surface du liquide n'influencent pas la mesure capacitive. On peut remarquer également que la mesure capacitive effectuée est indépendante de l'effet de ménisque et des vibrations. En outre, le corps 3 étant à parois épaisses, sa température et celle du liquide qu'il contient sont égales et insensibles aux variations lentes de la température ambiante.

Comme on peut le voir sur la figure 2, la face supérieure du capteur capacitif 11 est recouverte d'une plaque 62 réalisée en un isolant électrique bon conducteur de la chaleur sur laquelle est fixée une source de chaleur constituée par exemple par un transistor de puissance 63. Ce transistor de puissance 63 permet de réchauffer les éléments constitutifs 40, 41, 42 et 43 du capteur capacitif 11 afin d'éviter la formation de buée sur sa surface inférieure, buée qui ferait varier la capacité et par là fausserait les mesures effectuées.

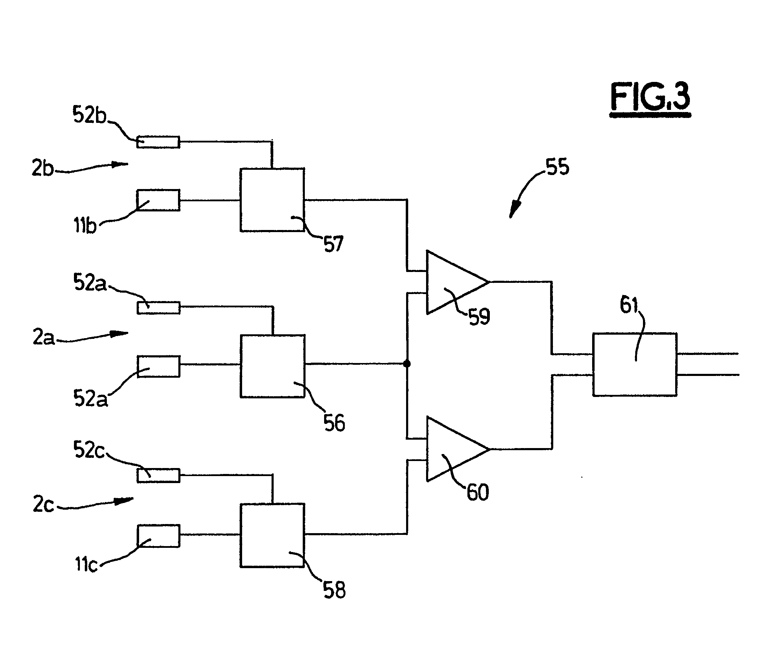

En se reportant à la figure 3, on va maintenant décrire un mode possible d'utilisation des signaux fournis par les capteurs capacitifs 11 et les sondes de températures 52 des pots 2a, 2b et 2c à partir du schéma repéré d'une manière générale par la référence 55.

On suppose que l'on souhaite connaître les positions relatives des points sur lesquels sont fixés les pots 2b et 2c par rapport au point sur lequel est fixé le pot 2a qui constitue alors un point de référence.

Les signaux de distance fournis par le capteur capacitif 11a du pot 2a sont transmis à un circuit de correction 56 qui reçoit également les signaux de la sonde de température 52a de ce pot et qui fournit à sa sortie un signal corrigé de la distance entre le capteur capacitif 11a et la surface supérieure du liquide contenu dans ce pot.

De la même manière, les capteurs capacitifs 11b et 11c et les sondes de température 52b et 52c sont respectivement reliés à des circuits de correction 57 et 58 qui fournissent à leur sortie des signaux corrigés correspondant aux distances entre ces capteurs capacitifs et la surface supérieure des colonnes de liquide contenu dans ces pots.

Les signaux de sortie des circuits de correction 56 et 57 sont transmis à un circuit électronique de comparaison 59 qui fournit à sa sortie un signal correspondant à la différence algébrique entre les positions relatives des points sur lesquels sont fixés les pots 2a et 2b.

De la même manière, les signaux de sortie des circuits de correction 56 et 58 sont transmis à un circuit de comparaison 60 qui fournit à sa sortie un signal correspondant à la différence algébrique entre les positions verticales relatives entre les points sur lesquels sont fixés les pots 2a et 2c. Les signaux de sortie des circuits de comparaison 59 et 60 peuvent alors être transmis à un circuit d'interprétation 61 adapté par exemple pour fournir à sa sortie des signaux de commande ou des signaux de visualisation des différences précitées.

Pour reprendre l'exemple d'application mentionné plus haut, ces signaux de commande peuvent être destinés à la commande des vérins de réglage dans le sens vertical des éléments magnétiques sur lesquels sont fixés les pots 2b et 2c afin de déplacer ces derniers de manière à les disposer convenablement par rapport à l'élément magnétique sur lequel est fixé le pot de référence 2a.

Grâce aux dispositions précitées du dispositif 1, il est possible d'effectuer en continu le contrôle de dénivellation des points sur lesquels sont fixés les pots 2a, 2b et 2c et de réaliser un asservissement du réglage de positions dans le sens vertical des éléments magnétiques. Bien entendu, cet asservissement peut être soumis à des conditions d'écart entre les distances mesurées précitées, à des conditions de temps telles que le liquide contenu dans le circuit de liquide 31 soit stabilisé entre chaque mesure ou à des conditions d'écarts maximum ou minimum entre lesquels on peut effectuer les mesures capacitives de distance et plus particulièrement à des conditions d'écarts maximum nécessitant une addition de liquide dans le circuit de liquide 31.

La présente invention ne se limite pas à l'exemple ci-dessus décrit, bien de variantes étant possibles. En particulier, le dispositif selon l'invention peut être utilisé non seulement pour maintenir dans un plan horizontal des équipements ou mesurer des variations de position verticale d'équipements par rapport à un plan horizontal mais peut également s'appliquer pour la mesure ou le contrôle de points situés dans des plans horizontaux différents. Pour cela, il suffirait par exemple de placer des cales en-dessous de certains des pots. Par ailleurs, il va de soi que le traitement des mesures capacitives effectuées pourrait être fait aussi bien pour effectuer les corrections de mesure que les commandes souhaitées et que les procédures précitées de surveillance et de mesure du dispositif.

## Revendications

1. Dispositif de mesure ou de contrôle de dénivellation ou de variation de dénivellation entre plusieurs points, caractérisé par le fait qu'il comprend des pots fermés (2), placés respectivement en chacun desdits points, ces pots étant partiellement remplis d'un liquide (53) et étant reliés par des conduites de liquide débouchant dans leur partie inférieure de manière à former un circuit de liquide (31) et par des conduites de gaz débouchant dans leur partie supérieure de manière à former un circuit de gaz (36), chaque pot étant équipé d'un capteur capacitif (11) de proximité qui présente au moins deux électrodes espacées horizontalement et dont la face inférieure est placée au-dessus et à distance de la surface supérieure (54) du liquide qu'il contient et qui est adapté pour fournir un signal de position dans le sens vertical d'une zone de cette surface supérieure du liquide dans ce pot, ainsi que des moyens (56, 57) pour comparer les signaux fournis par lesdits capteurs de manière à pouvoir fournir des informations de position verticale desdits pots, et en conséquence desdits points, les uns par rapport aux autres ou par rapport à une position verticale de référence.

2. Dispositif selon la revendication 1, caractérisé par le fait que ledit circuit de gaz (36) est relié à une source de gaz à pression constante.

3. Dispositif selon l'une des revendications précédentes, caractérisé par le fait que le gaz précité est de l'air, le circuit d'air (36) ainsi constitué étant relié à l'atmosphère.

4. Dispositif selon l'une quelconque des revendications précédentes, caractérisé par le fait qu'il comprend un pot auxiliaire (21) inséré dans le circuit de liquide (31) et dans le circuit de gaz (36), ce pot auxiliaire étant adapté pour le remplissage du circuit de liquide.

5. Dispositif selon l'une quelconque des revendications précédentes, caractérisé par le fait qu'il comprend une pompe (39) permettant de faire circuler le liquide dans ledit circuit de liquide (31).

6. Dispositif selon la revendication 5, caractérisé par le fait que ledit circuit de liquide (31) est équipé d'une vanne de fermeture (37), ladite pompe (39) étant montée en by-pass par rapport à cette vanne.

7. Dispositif selon l'une quelconque des revendications précédentes, caractérisé par le fait que le corps (3) dudit pot est à paroi épaisse.

8. Dispositif selon l'une quelconque des revendications précédentes, caractérisé par le fait que chaque pot est équipé d'une sonde de température (52) permettant de mesurer la température du liquide.

9. Dispositif selon la revendication 8, caractérisé par le fait que ladite sonde (52) est insérée dans le corps (3) du pot et s'étend à faible distance du liquide.

10. Dispositif selon l'une quelconque des revendications précédentes, caractérisé par le fait que le liquide remplissant le circuit de liquide (31) précité est de l'eau contenant une substance antibactérienne telle que de l'eau de Javel.

11. Dispositif selon l'une quelconque des revendications précédentes, caractérisé par le fait que ledit capteur capacitif (11) comprend une électrode centrale (40) entourée à distance par une électrode annulaire de garde, un isolant électrique annulaire (42) placé entre ces électrodes et relié à ces dernières de façon étanche ainsi qu'un isolant électrique annulaire (43) s'étendant autour de l'électrode annulaire de garde (41) et relié de façon étanche à cette dernière et au corps (3) du pot, la face radiale inférieure desdites électrodes et desdits isolants, tournée vers la surface du liquide, étant dans un même plan horizontal (12).

12. Dispositif selon la revendication 11, caractérisé par le fait que lesdites électrodes sont en un alliage de fer et de nickel à 42% de nickel.

13. Dispositif selon la revendication 11, caractérisé par le fait que lesdits isolants électriques sont en verre.

14. Dispositif selon la revendication 11, caractérisé par le fait que la face inférieure dudit capteur capacitif est recouverte d'une couche (45) résistant à la corrosion.

15. Dispositif selon l'une quelconque des revendications précédentes, caractérisé par le fait que la paroi intérieure dudit pot est recouverte d'une couche résistant à la corrosion.

16. Dispositif selon l'une des revendications 14 et 15, caractérisé par le fait que ladite couche de revêtement est en étain-zinc.

17. Dispositif selon l'une quelconque des revendications précédentes, caractérisé par le fait que ledit capteur capacitif est porté par une partie supérieure amovible (7) dudit pot (3).

18. Dispositif selon l'une quelconque des revendications précédentes, caractérisé par le fait qu'il comprend un moyen (63) permettant de chauffer le capteur capacitif.

FIG.1

# FIG.2

FIG.3

EP 0 445 480 A2